# FASCICULE DE BREVET EUROPEEN

(11) **EP 1 288 218 B1**
(45) Date de publication et mention de la délivrance du brevet: **15.06.2005**
(21) Numéro de dépôt: 02292165.4
(22) Date de dépôt: 03.09.2002
(51) Int. Cl.: C07F 7/08, C08F 8/42, B01J 23/42, B01J 23/44, B01J 23/46, C08F 255/02, C08F 259/04, C08J 3/24

(54) **Procédé de fabrication d'un corps cylindrique et cable comportant un corps obtenu par ce procédé**
Verfahren zur Herstellung eines zylindrischen Körpers sowie Kabel welches diesen Körper enthält
Method of production of cylindrical body and a cable comprising said body

(30) Priorité: 03.09.2001 FR 0111505
(43) Date de publication de la demande: 05.03.2003
(73) Titulaire: Nexans, 75008 Paris (FR)
(72) Inventeur: Pomperie, Lionel, 78160 Auffargis (FR)
(74) Mandataire: Lenne, Laurence

(56) Documents cités:
- EP-A- 0 431 173
- EP-A- 0 829 504
- EP-A- 1 116 731
- WO-A-98/33801
- DATABASE WPI Section Ch, Week 200137 Derwent Publications Ltd., London, GB; Class A18, AN 2001-350290 XP002196496 & JP 2001 098076 A (SHINETSU CHEM IND CO LTD), 10 avril 2001 (2001-04-10)
- DATABASE WPI Section Ch, Week 200173 Derwent Publications Ltd., London, GB; Class A13, AN 2001-638860 XP002196497 & WO 01 59011 A (KANEKA CORP), 16 août 2001 (2001-08-16)
- DATABASE WPI Section Ch, Week 199534 Derwent Publications Ltd., London, GB; Class A18, AN 1995-261301 XP002196498 & JP 07 165817 A (KANEBUCHI KAGAKU KOGYO KK), 27 juin 1995 (1995-06-27)

## Description

La présente invention se rapporte à un procédé de fabrication d'un corps cylindrique destiné notamment à être employé dans les accessoires de câbles ou comme gaine et/ou isolation de câbles de télécommunications ou de câbles d'énergie.

Pour ce type d'utilisation, on cherche à fabriquer des corps cylindriques possédant de bonnes propriétés thermomécaniques.

De manière connue, les corps cylindriques répondant le mieux à ce critère sont des compositions à base de polymères réticulés dans lesquels une structure tridimensionnelle est formée par liaisons covalentes entre les chaînes.

Des compositions à base de polymères réticulés sont obtenues à l'aide de silanes tels que le vinylsilane souvent greffé sur les polymères. Un tel procédé de réticulation implique en particulier après l'extrusion une immersion de la composition dans de l'eau chauffée (dite immersion dans une piscine). Par conséquent, l'immersion dans l'eau étant particulièrement onéreuse et nécessitant des infrastructures spécifiques, la durée de fabrication des câbles contenant une telle composition est longue et peu compatible avec les exigences industrielles notamment en terme de rentabilité.

D'autres compositions à base de polymères réticulés sont obtenues par voie peroxydique. Ceci nécessite après l'extrusion une décomposition du peroxyde sous pression gazeuse et à haute température dans de longs tubes dits de vulcanisation. Cette décomposition conditionne la réticulation. De plus, la pression gazeuse peut altérer certaines propriétés des polymères (déformation de l'isolation, etc...). Par conséquent, la voie peroxydique conduit à des compositions plutôt onéreuses et d'utilisation limitée.

En outre, le peroxyde est introduit soit lors du «compoundage», c'est-à-dire lors de l'élaboration de la composition dans un mélangeur interne ou continu soit au début de l'étape suivante d'extrusion. Afin d'éviter la décomposition du peroxyde pendant l'extrusion conduisant à une pré-réticulation de la composition dégradant ses propriétés finales, la température d'extrusion est inférieure à la température de décomposition. La composition est donc assez visqueuse de sorte que la vitesse d'extrusion est peu élevée.

Ainsi, les procédés de fabrication des compositions à base de polymère réticulé de l'art antérieur comprennent une série d'étapes complexes et coûteuses.

Dans l'art antérieur des compositions polymériques sont également produites par une réaction dite d'hydrosilylation.

La demande de brevet WO-9833801 divulgue un procédé d'hydrosilylation d'une composition polymérique insaturée, c'est-à-dire comprenant au moins une double liaison carbone-carbone, au moyen d'un composé d'hydrosilylation comprenant au moins une liaison silicium-hydrogène de type hydrure de silicium, ceci sous l'action d'un catalyseur à base de platine et d'un promoteur de réaction. Dans cette réaction d'hydrosilylation, la double liaison carbone-carbone réagit avec la liaison silicium-hydrogène. Les exemples proposés présentent principalement des greffages des composés d'hydrosilylation en terminaison de la composition polymérique insaturée. Ce document précise aussi que lorsqu'un nombre suffisant de doubles liaisons carbone-carbone et de liaisons silicium-hydrogène sont disponibles et réagissent, la composition polymérique peut former par hydrosilylation un réseau tridimensionnel et donc être réticulée.

L'objectif de ce document est d'augmenter la réactivité du catalyseur en accélérant la réaction d'hydrosilylation grâce au promoteur de réaction. Dans la description du procédé, il est mentionné que l'hydrosilylation est réalisée en remuant continûment les constituants et de préférence en milieu solvant, le composé insaturé et l'hydrure de silicium étant alors solubilisés. Dans ce dernier cas, une étape ultérieure d'évaporation du solvant et des autres réactifs permet de récupérer la composition polymérique hydrosilysée et éventuellement réticulée.

Lorsqu'un tel procédé d'hydrosilylation aboutit à une composition polymérique réticulée, cette réticulation empêche toute étape de mise en forme ultérieure car la réticulation intervient pendant le mélange des constituants. Par conséquent, ce procédé d'hydrosilylation de l'art antérieur ne permet pas de fabriquer une gaine et/ou un isolant de câbles.

La présente invention a pour but de mettre au point un procédé de fabrication d'un corps cylindrique en un matériau polymère réticulé permettant d'obtenir un corps cylindrique possédant de bonnes propriétés thermomécaniques et utilisable comme gaine et/ou isolant dans le domaine des câbles. En outre ce procédé doit être simple, rapide, notamment au niveau de l'étape d'extrusion, et peu coûteux.

A cet effet, la présente invention propose un procédé de fabrication d'un corps cylindrique comprenant :
- une étape de mélange d'au moins deux chaînes polymériques insaturées possédant chacune au moins une ramification à double liaison carbone-carbone et d'un composé hydrosilysant possédant au moins deux liaisons silicium-hydrogène en présence d'au moins un catalyseur d'hydrosilylation, le mélange obtenu étant non réticulé,
- une étape d'extrusion dudit mélange,
la réticulation dudit mélange par hydrosilylation se terminant postérieurement à ladite étape d'extrusion.

De cette façon, le procédé selon l'invention permet de fabriquer un corps cylindrique tel qu'un jonc ou un tube par exemple destiné à enrober l'âme des câbles d'énergie ou de télécommunications. Par ce procédé, on peut ainsi réaliser des gaines de câbles. Hormis les résidus catalytiques, le procédé selon l'invention présente de plus l'avantage de ne pas générer de résidus à l'origine de claquages de sorte qu'on peut aussi fabriquer des isolants pour des câbles d'énergie.

Contrairement à l'art antérieur, le taux de réaction d'hydrosilylation n'est pas suffisamment important - voire nul - pendant le malaxage des constituants de sorte que le mélange obtenu n'est pas encore réticulé.

Par ailleurs, le mélange peut être directement réalisé dans l'extrudeuse. Le mélange non réticulé possède une faible viscosité ce qui augmente la rapidité de l'extrusion. L'évolution de la viscosité est notamment contrôlable en fonction du taux de catalyseur d'hydrosilylation. On peut également combiner plusieurs catalyseurs d'hydrosilylation.

Ce mélange non réticulé est transporté à l'aide d'une vis de la zone d'alimentation de l'extrudeuse jusqu'à la filière. La pression et la température augmentent progressivement le long de la vis forçant ainsi le mélange non réticulé à passer de l'état solide à celui de matière fondue, pour un polymère cristallin, ou faiblement visqueux, pour un élastomère. La filière, située à la sortie d'un fourreau, permet la mise en forme cylindrique du mélange extrudé.

Le catalyseur peut être introduit sous forme solubilisée afin de faciliter sa dispersion. Un évaporateur placé avant la sortie de l'extrudeuse peut permettre d'éliminer les produits de solubilisation.

Contrairement aux réticulations par voie silane ou peroxydique la réticulation du mélange selon l'invention se produit lors d'un stockage à l'air et à température ambiante du mélange extrudé. Typiquement, la réticulation dure de quelques jours à quelques semaines suivant les constituants choisis. Le composé hydrosilysant comporte au moins deux liaisons silicium-hydrogène : la bifonctionnalité permet de réaliser la réticulation par réaction avec au moins deux chaînes polymériques selon l'invention.

Un passage ultérieur dans une étuve peut accélérer la réticulation. On obtient ainsi un corps cylindrique selon l'invention.

Le poids moléculaire des chaînes polymériques insaturées utilisées dans le procédé selon l'invention peut varier en fonction des propriétés souhaitées. Les chaînes peuvent appartenir au même polymère - homopolymère et copolymère - ou bien à des polymères distincts. La quantité relative de doubles liaisons carbone-carbone et de liaisons silicium-hydrogène disponibles est choisie pour obtenir le taux de réticulation souhaité . Il est souhaitable que le corps cylindrique selon l'invention tienne le « HOT SET TEST » (HST en abrégé) défini selon la norme NF EN 60811-2-1.

Pour empêcher le démarrage de la réticulation lors du mélange, on peut réduire la durée de l'étape de mélange et par exemple le temps de séjour dans l'extrudeuse.

Aussi, dans un mode de réalisation de l'invention, l'étape de mélange a une durée sensiblement inférieure à cinq minutes.

Un autre moyen pour obtenir un mélange non réticulé est de choisir une quantité de catalyseur telle que le temps de réaction de l'hydrosilylation est supérieur à la durée du mélange.

Aussi, avantageusement, le mélange non réticulé peut contenir sensiblement moins de 1% en poids total du ou des catalyseurs et de préférence entre 100 et 300 ppm.

Dans un mode de réalisation de l'invention, le ou les catalyseurs selon l'invention peuvent être choisis parmi les molécules à base de métaux de transition de la colonne VIII du tableau périodique des éléments tels que le palladium, le rhodium, le platine et les complexes associés.

On choisit des températures de mélange comprises entre 60°C et 180°C.

La durée de l'étape de mélange est de préférence d'autant plus courte que la température choisie est élevée. En effet, une température élevée a tendance à accélérer la réaction de l'hydrosilylation.

Dans un mode de réalisation préféré de l'invention, au moins l'une des doubles liaisons carbone-carbone est de type pendante.

Dans ce cas, la ramification l'incorporant n'est pas au coeur de la chaîne polymérique : elle peut donc soit être située au bout de la chaîne soit être rattachée latéralement. Ceci permet, dans certains cas, une réactivité supérieure.

Selon l'invention, chacune des chaînes polymériques peut appartenir à un polymère choisi parmi les polymères thermoplastiques.

A titre d'exemple pour la fabrication d'un corps cylindrique en un polymère thermoplastique, on peut choisir des polymères amorphes ou des polymères cristallins ayant de bonnes propriétés thermomécaniques.

De préférence, chacune des chaînes polymériques selon l'invention peut appartenir à un polychlorure de vinyle (PVC) connu pour ses propriétés ignifugeantes.

Dans un mode de réalisation de l'invention, chacune des chaînes polymériques appartient à un polymère choisi parmi les oléfines, les polyoléfines et de préférence parmi les EPDM et les polyéthylènes.

Les polyoléfines sont avantageuses car ce sont des plastiques de grande diffusion donc de faible coût, possédant des propriétés mécaniques et électriques compatibles avec les spécifications demandées dans le domaine de la câblerie. Un EPDM est un terpolymère d'éthylène-propylène-diène à chaîne principale méthylène connu pour ses propriétés élastomériques. Le polyéthylène (PE) permet de fabriquer des câbles ayant de bonnes propriétés thermomécaniques.

En outre, le composé hydrosilysant selon l'invention peut être choisi parmi les silanes, les polysilanes et les siloxanes.

Le composé hydrosilysant selon l'invention peut notamment faire partie d'une molécule de faible poids moléculaire ou d'un oligomère.

De préférence, le composé hydrosilysant peut être un méthylhydrocyclosiloxane.

Dans un mode de réalisation de l'invention, le composé hydrosilysant comporte au moins deux liaisons silicium-hydrogène portées par un même silicium.

Dans une variante de l'invention, une charge ignifugeante est ajoutée lors de l'étape de mélange.

L'ajout d'une charge n'empêche pas la réaction d'hydrosilylation selon invention de se produire et peut participer à la réduction des coûts.

Le procédé selon l'invention peut permettre de produire divers produits finis bénéficiant des propriétés mécaniques et de résistance à la chaleur que possède le mélange réticulé obtenu. Comme exemples de tels produits finis, on peut mentionner les câbles d'énergie - de basse, moyenne ou haute tension - ou de télécommunications dont l'isolation et/ou la gaine peut être formée par un corps cylindrique en un matériau réticulé obtenu par le procédé selon l'invention.

L'invention sera mieux comprise à l'aide des exemples suivants de procédés selon l'invention, donnés à titre illustratif et nullement limitatif.

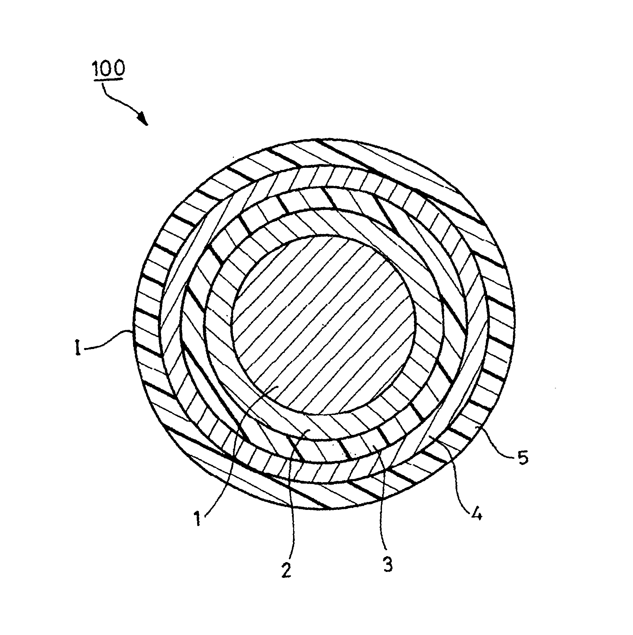

La figure unique représente une section d'un câble d'énergie comportant une gaine obtenue par le procédé selon l'invention.

### Exemple 1

Le procédé de fabrication d'un corps cylindrique selon l'invention comporte :
- une étape de mélange de chaînes polymériques insaturées d'un EPDM de type Vistalon 6505 à 9% de dène de type éthylidène norbornène possédant plusieurs ramifications à double liaison carbone-carbone de type vinylique et d'un composé hydrosilysant possédant plusieurs liaisons silicium-hydrogène tel que le méthylhydrocyclosiloxane [(CH₃)HSiO]ₙ n variant de 4 à 6. Ceci est effectué en présence d'un catalyseur d'hydrosilylation tel qu'un complexe de platine 1,1,1,3,3-tétraméthyl-1, 3-divinylsiloxane représentant moins de 1% du poids total et d'une charge telle que le carbonate de calcium,
- une étape d'extrusion du mélange.

L'étape de mélange est réalisée à 120°C lors d'un « compoundage » en mélangeur interne ou continu et dure moins de 5 min : l'hydrosilylation n'est pas ou est peu amorcée de sorte que le mélange n'est pas encore réticulé. Le mélange est peu visqueux jusqu'à 160°C de sorte que l'étape d'extrusion suivant l'étape de mélange est très rapide et facile. On choisit par exemple de procéder à l'extrusion à une température de 120°C avec un taux de cisaillement de l'ordre de 15 rpm.

La réticulation du mélange par hydrosilylation se termine postérieurement à l'étape d'extrusion : après l'extrusion, on laisse réticuler à l'air libre et à température ambiante pendant environ deux semaines en stockant le mélange de forme cylindrique sans précautions particulières pour obtenir le corps cylindrique selon l'invention.

On mesure ensuite la résistance à la rupture (R, en MPa), l'allongement à la rupture (A, en %), la tenue (ou non-tenue) au fluage ou déformation selon la norme NF EN 60811-2-1 (HST) et la dureté SHORE A selon la norme NF 51-109 du corps cylindrique. Les résultats des mesures sont consignés dans le Tableau 1 ci-après.

**Tableau 1**

| PROPRIETES | |
|---|---|
| R (MPa) | 3,6 |
| A (%) | 400 |
| HST(200°C/0,2 MPa/15 mn) | oui |
| Dureté SHORE A | 44 |

On constate que les propriétés thermomécaniques ainsi que la tenue au fluage ou déformation sont bonnes. La dureté SHORE A est faible, ce qui est avantageux, notamment dans le cas d'une utilisation comme gaine ou isolation pour câbles.

### Exemple 2

En remplaçant l'EPDM de l'Exemple 1 par un PE de type Nordel 4820 et/ou 4920, on peut de manière analogue à l'Exemple 1 obtenir un corps cylindrique selon l'invention ayant de bonnes propriétés thermomécaniques. Les résultats des mesures sont consignés dans le Tableau 2 ci-après.

**Tableau 2**

| PROPRIETES | |
|---|---|
| R (MPa) | 20 |
| A (%) | 450 |
| HST(200°C/0,2 MPa/15 mn) | oui |

### Exemple 3

En remplaçant l'EPDM de l'Exemple 1 par un PVC, on peut de manière analogue à l'Exemple 1 obtenir un corps cylindrique selon l'invention tenant le HST.

### Exemple 4

On fabrique un câble d'énergie comportant une gaine obtenue par le procédé selon invention. La figure unique représente une section de ce câble d'énergie 100.

Le câble d'énergie 100 comporte une âme conductrice 1 entourée d'une structure d'isolement I qui lui est coaxiale. Cette structure I comporte au moins une première couche semi-conductrice 2 placée au contact de l'âme 1 du câble 100, elle-même entourée d'une deuxième couche 3 électriquement isolante, à son tour recouverte par une troisième couche semi-conductrice 4. La couche extérieure 5 est une gaine qui sert à la protection du câble 100 et est formée par le corps cylindrique selon la présente invention.

On réalise un mélange des constituants indiqués dans l'Exemple 1. Une fois dans l'extrudeuse, le mélange est transporté à l'aide d'une vis de la zone d'alimentation jusqu'à la filière. La pression augmente progressivement le long de la vis forçant ainsi le mélange à passer par la filière pour lui donner une forme figée en sortie de cette dernière. Cette technique permet grâce à l'adaptation d'une tête de filière appropriée de recouvrir des fils par exemple en cuivre (non représentés) de l'âme 1 du câble 100.

Bien entendu, la description qui précède a été donnée à titre purement illustratif. On pourra sans sortir du cadre de l'invention remplacer tout moyen par un moyen équivalent.

On peut ainsi ajouter lors de l'étape de mélange des polymères non hydrosilysables.

De même le procédé selon l'invention peut permettre de fabriquer un corps en un matériau réticulé de forme autre que cylindrique.

## Revendications

1. Procédé de fabrication d'un corps cylindrique comprenant :
- une étape de mélange d'au moins deux chaînes polymériques insaturées possédant chacune au moins une ramification à double liaison carbone-carbone et d'un composé hydrosilysant possédant au moins deux liaisons silicium-hydrogène en présence d'au moins un catalyseur d'hydrosilylation, le mélange obtenu étant non réticulé,
- une étape d'extrusion dudit mélange,
la réticulation dudit mélange par hydrosilylation se terminant postérieurement à ladite étape d'extrusion.

2. Procédé de fabrication d'un corps cylindrique selon la revendication 1 **caractérisé en ce que** ladite étape de mélange a une durée sensiblement inférieure à cinq minutes.

3. Procédé de fabrication d'un corps cylindrique selon l'une des revendications 1 ou 2 **caractérisé en ce que** ledit mélange non réticulé contient sensiblement moins de 1% en poids total dudit ou desdits catalyseurs et de préférence entre 100 et 300 ppm.

4. Procédé de fabrication d'un corps cylindrique selon l'une des revendications 1 à 3 **caractérisé en ce que** ledit ou lesdits catalyseurs sont choisis parmi les molécules à base de métaux de transition de la colonne VIII du tableau périodique des éléments tels que le palladium, le rhodium, le platine et les complexes associés.

5. Procédé de fabrication d'un corps cylindrique selon l'une des revendications 1 à 4 **caractérisé en ce que** ladite étape de mélange est réalisée à des températures comprises entre 60°C et 180°C.

6. Procédé de fabrication d'un corps cylindrique selon l'une des revendications 1 à 5 **caractérisé en ce qu'**au moins l'une desdites doubles liaisons carbone-carbone est de type pendante.

7. Procédé de fabrication d'un corps cylindrique selon l'une des revendications 1 à 6 **caractérisé en ce que** chacune desdites chaînes polymériques appartient à un polymère choisi parmi les polymères thermoplastiques.

8. Procédé de fabrication d'un corps cylindrique selon l'une des revendications 1 à 7 **caractérisé en ce que** chacune desdites chaînes polymériques appartient à un polychlorure de vinyle.

9. Procédé de fabrication d'un corps cylindrique selon l'une des revendications 1 à 7 **caractérisé en ce que** chacune desdites chaînes polymériques appartient à un polymère choisi parmi les oléfines, les polyoléfines et de préférence parmi les EPDM et les polyéthylènes.

10. Procédé de fabrication d'un corps cylindrique selon l'une des revendications 1 à 9 **caractérisé en ce que** ledit composé hydrosilysant est choisi parmi les silanes, les polysilanes et les siloxanes.

11. Procédé de fabrication d'un corps cylindrique selon l'une des revendications 1 à 10 **caractérisé en ce que** ledit composé hydrosilysant est un méthylhydrocyclosiloxane.

12. Procédé de fabrication d'un corps cylindrique selon l'une des revendications 1 à 11 **caractérisé en ce que** ledit composé hydrosilysant comporte au moins deux liaisons silicium-hydrogène portées par un même silicium.

13. Procédé de fabrication d'un corps cylindrique selon l'une des revendications 1 à 12 **caractérisé en ce qu'**une charge ignifugeante est ajoutée lors de ladite étape de mélange.

14. Câble (100) comportant une gaine (5) et/ou une isolation obtenue(s) par le procédé de fabrication selon l'une quelconque des revendications 1 à 13.

## Patentansprüche

1. Verfahren zur Herstellung eines zylindrischen Körpers mit:
- einem Schritt des Mischens von wenigstens zwei ungesättigten Polymerketten, die jeweils eine Verzweigung mit einer Kohlenstoff-Kohlenstoff-Doppelbindung und einer hydrosilysierenden Verbindung, die wenigstens zwei Silizium-Wasserstoff-Bindungen aufweist, in Gegenwart wenigstens eines Hydrosilylierungskatalysators,
wobei das erhaltene Gemisch nicht vernetzt ist,
- einem Schritt des Extrudierens des Gemischs,
wobei die Vernetzung des Gemischs durch Hydrosilylierung nach dem Schritt des Extrudierens endet.

2. Verfahren zur Herstellung eines zylindrischen Körpers nach Anspruch 1, **dadurch gekennzeichnet, dass** der Schritt des Mischens eine im wesentlichen kürzere Dauer als 5 Minuten hat.

3. Verfahren zur Herstellung eines zylindrischen Körpers nach einem der Ansprüche 1 oder 2, **dadurch gekennzeichnet, dass** das nicht vemetzte Gemisch im wesentlichen weniger als 1 %, bezogen auf das Gesamtgewicht, an dem oder den Katalysator(en) und vorzugsweise zwischen 100 und 300 ppm enthält.

4. Verfahren zur Herstellung eines zylindrischen Körpers nach einem der Ansprüche 1 bis 3, **dadurch gekennzeichnet, dass** der oder die Katalysator(en) ausgewählt sind unter den Molekülen auf Grundlage von Übergangsmetallen der Spalte VIII des Periodensystems der Elemente wie etwa Palladium, Rhodium, Platin, und den assoziierten Komplexen.

5. Verfahren zur Herstellung eines zylindrischen Körpers nach einem der Ansprüche 1 bis 4, **dadurch gekennzeichnet, dass** der Schritt des Mischens bei Temperaturen zwischen 60°C und 180°C vorgenommen wird.

6. Verfahren zur Herstellung eins zylindrischen Körpers nach einem der Ansprüche 1 bis 5, **dadurch gekennzeichnet, dass** wenigstens eine der Kohlenstoff-KohlenstoffDoppelbindungen vom hängenden Typ ist.

7. Verfahren zur Herstellung eines zylindrischen Körpers nach einem der Ansprüche 1 bis 6, **dadurch gekennzeichnet, dass** jede der Polymerketten zu einem unter den thermoplastischen Polymeren ausgewählten Polymer gehört.

8. Verfahren zur Herstellung eines zylindrischen Körpers nach einem der Ansprüche 1 bis 7, **dadurch gekennzeichnet, dass** jede der Polymerketten zu einem Polyvinylchlorid gehört.

9. Verfahren zur Herstellung eines zylindrischen Körpers nach einem der Ansprüche 1 bis 7, **dadurch gekennzeichnet, dass** jede der Polymerketten zu einem unter den Olefinen, den Polyolefinen, vorzugsweise den EPDM und den Polyethylenen ausgewählt ist.

10. Verfahren zur Herstellung eines zylindrischen Körpers nach einem der Ansprüche 1 bis 9, **dadurch gekennzeichnet, dass** die hydrosilysierende Verbindung ausgewählt ist unter den Silanen, den Polysilanen und den Siloxanen.

11. Verfahren zur Herstellung eine zylindrischen Körpers nach einem der Ansprüche 1 bis 10, **dadurch gekennzeichnet, dass** die hydrosilysierende Verbindung ein Methylhydrocyclosiloxan ist.

12. Verfahren zur Herstellung eines zylindrischen Körpers nach einem der Ansprüche 1 bis 11, **dadurch gekennzeichnet, dass** die hydrosilysierende Verbindung wenigstens zwei von einem gleichem Silizium getragene Silizium-Wasserstoff-Bindungen aufweist.

13. Verfahren zur Herstellung eines zylindrischen Körpers nach einem der Ansprüche 1 bis 12, **dadurch gekennzeichnet, dass** in dem Schritt des Mischens ein brandhemmender Zuschlag zugefügt wird.

14. Kabel (100) mit einer Hülle (5) und/oder einer Isolation, erhalten durch das Herstellungsverfahren nach einem der Ansprüche 1 bis 13.

## Claims

1. A method for manufacturing a cylindrical body comprising:
- a step for mixing at least two unsaturated polymer chains each having at least one branch with a double carbon-carbon bond and a hydrosilylation compound having at least two silicon-hydrogen bonds in the presence of at least one hydrosilylation catalyst, the obtained mixture being not crosslinked,
- a step for extruding said mixture,
the crosslinking of said mixture by hydrosilylation being completed after said extrusion step.

2. The method for manufacturing a cylindrical body according to claim 1, **characterized in that** said mixing step has a duration of substantially less than 5 minutes.

3. The method for manufacturing a cylindrical body according to any of claims 1 or 2, **characterized in that** said non-crosslinked mixture contains substantially less than 1% of said catalyst(s) and preferably between 100 and 300 ppm, based on total weight.

4. The method for manufacturing a cylindrical body according to any of claims 1 or 3, **characterized in that** said catalyst(s) are selected from molecules based on transition metals from column VIII of the Periodic Table of the Elements, such as palladium, rhodium, and platinum and associated complexes.

5. The method for manufacturing a cylindrical body according to any of claims 1 or 4, **characterized in that** said mixing step is performed at a temperature between 60°C and 180°C.

6. The method for manufacturing a cylindrical body according to any of claims 1 or 5, **characterized in that** at least one of said double carbon-carbon bonds is of the pendant type.

7. The method for manufacturing a cylindrical body according to any of claims 1 or 6, **characterized in that** each of said polymer chains belongs to a polymer selected from thermoplastic polymers.

8. The method for manufacturing a cylindrical body according to any of claims 1 or 7, **characterized in that** each of said polymer chains belongs to a polyvinyl chloride.

9. The method for manufacturing a cylindrical body according to any of claims 1 or 7, **characterized in that** each of said polymer chains belongs to a polymer selected from olefins, polyolefins, and preferably from EPMs and polyethylenes.

10. The method for manufacturing a cylindrical body according to any of claims 1 or 9, **characterized in that** said hydrosilylation compound is selected from silanes, polysilanes, and siloxanes.

11. The method for manufacturing a cylindrical body according to any of claims 1 or 10, **characterized in that** said hydrosilylation compound is a methylhydrocyclosiloxane.

12. The method for manufacturing a cylindrical body according to any of claims 1 or 11, **characterized in that** said hydrosilylation compound includes at least two silicon-hydrogen bonds borne by a same silicon.

13. The method for manufacturing a cylindrical body according to any of claims 1 or 12, **characterized in that** a flame-retardant filler is added upon said mixing step.

14. A cable (100) including a jacket (5) and/or an insulation obtained by the manufacturing method according to any of claims 1 to 13.
